# FASCICULE DE BREVET EUROPEEN

(11) **EP 3 902 709 B1**
(45) Date de publication et mention de la délivrance du brevet: **04.10.2023**
(21) Numéro de dépôt: 19813370.4
(22) Date de dépôt: 09.12.2019
(51) Int. Cl.: B60S 1/38, B60S 1/40

(54) **ADAPTATEUR POUR MONTURE DE BALAI D'ESSUYAGE DE VÉHICULE AUTOMOBILE**
ADAPTER FÜR EIN WISCHERBLATT EINES KRAFTFAHRZEUGS
ADAPTER FOR A WIPER BLADE MOUNTING OF A MOTOR VEHICLE

(30) Priorité: 27.12.2018 FR 1874275
(43) Date de publication de la demande: 03.11.2021
(73) Titulaire: Valeo Systèmes d'Essuyage, 78322 Le Mesnil Saint Denis (FR)
(72) Inventeur: POTON, Eric, 63500 ISSOIRE (FR); HOUSSAT, Stéphane, 63500 ISSOIRE (FR); GAUCHER, Vincent, 63500 ISSOIRE (FR)
(74) Mandataire: Valeo Visibility
(86) Numéro de dépôt international: PCT/EP2019/084280
(87) Numéro de publication internationale: WO 2020/136002

(56) Documents cités:
- WO-A1-2015/007179
- DE-A1-102011 007 248
- US-A1- 2014 068 887
- US-A1- 2015 375 716

## Description

### Domaine technique

La présente invention se situe dans le domaine des balais d'essuyage d'une vitre de véhicule automobile, et concerne plus particulièrement des adaptateurs pour la fixation d'une monture de balai d'essuyage sur un bras d'essuyage.

### État de la technique antérieure

Dans le domaine des véhicules automobiles, on connait des systèmes d'essuyage qui permettent d'essuyer une paroi vitrée d'un véhicule automobile. D'une manière générale, de tels système d'essuyage comprennent un ou plusieurs balais d'essuyage articulé afin de pouvoir être déplacé contre la paroi vitré. Chaque balai d'essuyage comprend une lame d'essuyage destinée à être mise en contact contre la paroi vitrée afin de pouvoir évacuer l'eau hors de la paroi vitrée, et un bras articulé qui permet d'une part de maintenir la lame d'essuyage au contact de la paroi vitrée, et d'autre part de générer un mouvement pendulaire contre la paroi vitrée.

Plus particulièrement, la lame d'essuyage est portée par une monture qui est rapportée sur le bras articulé. Afin de faciliter les opérations de maintenance, la monture est fixée de manière amovible au bras articulé par l'intermédiaire d'un adaptateur solidaire de la monture et configuré pour être connecté au bras articulé au travers d'au moins une liaison pivot.

Bien entendu, il existe une multitude d'adaptateurs, dépendant véhicules automobiles considérés, des formes et des dimensions des différentes montures et de leurs lames d'essuyage, ainsi que des types de bras articulés auxquels les montures sont destinées à être raccordées. Cette très grande variété de montures et de bras articulés conduit ainsi à concevoir un très grand nombre d'adaptateurs différents afin de pouvoir adapter chaque monture aux différents types de bras articulés, induisant une augmentation des coûts de production du fait de la multiplicité des séries de pièces différentes à fabriquer.

En outre, cette situation rend le marché de la deuxième monte plus complexe pour le réparateur occasionnel, car il est nécessaire d'acheter à la fois une monture de balai d'essuyage et l'adaptateur correspondant au bras articulé installé sur le véhicule automobile. WO-A-2015/007179 montre un adaptateur pour fixation d'une monture de balai d'essuyage sur un bras articulé de balai d'essuyage.

Il existe ainsi un besoin de simplification et de rationalisation des dispositifs permettant le remplacement des lames d'essuyage sur un véhicule automobile.

En outre, le montage des adaptateurs sur les montures de balai d'essuyage est parfois non intuitif à mettre en oeuvre par un particulier sur le marché de la seconde monte. Un problème technique de la présente invention est donc de permettre un assemblage plus facile à mettre en oeuvre de l'adaptateur sur la monture de balai d'essuyage, et d'éviter un montage à l'envers dudit adaptateur sur ladite monture.

La présente invention a pour objet de répondre au moins en grande partie aux problèmes précédents et de conduire en outre à d'autres avantages en proposant un nouvel adaptateur pour la fixation d'une monture de balai d'essuyage sur un bras articulé de balai d'essuyage.

Un autre but de la présente invention est de faciliter la connexion d'un tel adaptateur à plusieurs types de bras articulés de balai d'essuyage.

Un autre but de la présente invention est de réduire les coûts de fabrication d'un tel adaptateur.

### Exposé de l'invention

Selon un premier aspect de l'invention, on atteint au moins l'un des objectifs précités avec un adaptateur pour fixation d'une monture de balai d'essuyage sur un bras articulé de balai d'essuyage, l'adaptateur comprenant (i) un capot configuré pour être fixé de manière amovible à un palonnier principal de la monture de balai d'essuyage, et (ii) un dispositif d'assemblage du capot sur un palonnier principal de la monture de balai d'essuyage, ledit dispositif d'assemblage comprenant un système d'indexation angulaire configuré pour permettre un assemblage du capot sur le palonnier principal par rotation dudit capot par rapport audit palonnier principal.

Le système d'indexation angulaire du capot de l'adaptateur conforme au premier aspect de l'invention permet ainsi d'assembler le capot dudit adaptateur sur le palonnier principal de la monture de balai d'essuyage par la mise en oeuvre d'un mouvement de rotation du capot par rapport au palonnier principal, comme il sera décrit plus en détail ultérieurement dans le quatrième aspect de l'invention. À l'issue du mouvement de rotation du capot par rapport au palonnier principal, le capot collabore avec le palonnier principal par un engagement de formes complémentaires : il est alors fixé solidairement audit palonnier principal, de manière détachable.

Consécutivement, le capot peut ainsi être personnalisé en fonction du type de balai d'essuyage avec lequel il est destiné à collaborer. En d'autres termes, le capot peut être conçu spécifiquement en fonction d'un type de fixation du balai d'essuyage à l'adaptateur.

L'invention conforme au premier aspect de l'invention se destine tout particulièrement au marché de la deuxième monte des systèmes d'essuyage et/ou des balais d'essuyage et/ou des adaptateurs pour de tels balais d'essuyage.

Dans le contexte de l'invention, on les adjectifs suivants sont définis relativement au capot de l'adaptateur conforme au premier aspect de l'invention :
- l'adjectif « longitudinal » fait référence à une direction d'élongation du capot suivant sa plus grande longueur. Lorsque l'adaptateur est monté sur un balai d'essuyage, la direction longitudinale fait référence à l'axe formé par la lame d'essuyage. Par extension, la direction longitudinale fait référence à une direction qui est parallèle ou sensiblement parallèle à la plus grande longueur de la lame d'essuyage ; et les adjectifs « avant » et « arrière » font référence à une position relative le long de l'axe longitudinal ;
- l'adjectif « transversal » ou « latéral » fait référence à une direction d'élongation perpendiculaire à la direction longitudinale, et plus particulièrement une direction perpendiculaire à deux côtés latéraux d'élongation longitudinale du capot. Lorsque l'adaptateur est accouplé à une monture de balai d'essuyage, un axe longitudinal et un axe transversal du capot forment ensemble un plan parallèle à une surface d'appui du capot sur la monture du balai d'essuyage ;
- l'adjectif « vertical » fait référence à une direction simultanément perpendiculaire à la direction longitudinale et à la direction transversale. À titre d'exemple, une direction verticale fait référence notamment à la position relative du palonnier d'une monture de balai d'essuyage par rapport au capot de l'adaptateur conforme au premier aspect de l'invention. Par extension, les adjectifs « inférieur » et « supérieur » font référence à une position relative le long de l'axe vertical.

L'adaptateur conforme au premier aspect de l'invention peut comprendre avantageusement au moins un des perfectionnements ci-dessous, les caractéristiques techniques formant ces perfectionnements pouvant être prises seules ou en combinaison :
- le capot comprend une ouverture centrale délimitée latéralement par deux côtés latéraux et logeant un système d'attache du bras articulé de balai d'essuyage sur l'adaptateur conforme au premier aspect de l'invention. Cette configuration avantageuse permet ainsi de loger astucieusement le système d'attache dans l'ouverture centrale afin de limiter l'encombrement du capot. En outre, l'ouverture centrale permet, en fonction des différents types de couplage entre l'adaptateur et le bras articulé, de loger une pluralité de types différents de systèmes d'attache ;
- le système d'attache comprend un axe de liaison pivot qui s'étend transversalement au travers de l'ouverture centrale entre les deux côtés latéraux du capot. Cette configuration avantageuse permet ainsi de pouvoir accoupler l'adaptateur sur le bras articulé selon une liaison pivot qui permet à son tour d'améliorer le plaquage du balai d'essuyage contre la paroi vitrée du véhicule automobile ;
- selon une première variante de réalisation, le système d'attache du bras articulé de balai d'essuyage sur l'adaptateur conforme au premier aspect de l'invention est issu de matière avec le capot. Dans le contexte de l'invention, l'expression « issu de matière » signifie que le système d'attache et le capot sont issus d'un même procédé de fabrication et qu'ils ne peuvent être séparés l'un de l'autre sans détériorer l'un et/ou l'autre. Dans cette première variante de réalisation, une pluralité de capot peut être conçu en fonction d'une pluralité de types de système d'attache, en fonction des bras articulés de balai d'essuyage correspondants. Alternativement, selon une deuxième variante de réalisation, le système d'attache est amovible et rapporté sur le capot par l'intermédiaire de moyens de fixation temporaire. Dans cette deuxième variante de réalisation, le capot est normalisé et seul le système d'attache est conçu en fonction du bras articulé de balai d'essuyage auquel il est destiné à être associé ;

- le dispositif d'assemblage de l'adaptateur conforme au premier aspect de l'invention est configuré pour permettre une rotation du capot par rapport au palonnier principal avec lequel l'adaptateur conforme au premier aspect de l'invention est destiné à collaborer et suivant l'axe vertical dudit capot ;
- le dispositif d'assemblage de l'adaptateur conforme au premier aspect de l'invention est situé au niveau d'une face d'appui du capot contre le palonnier principal de la monture de balai d'essuyage avec laquelle l'adaptateur conforme au premier aspect de l'invention est destiné à collaborer. Cette configuration avantageuse permet de faciliter la mise en contact du capot contre le palonnier principal, et, consécutivement, de faciliter l'assemblage de l'adaptateur conforme au premier aspect de l'invention sur la monture de balai d'essuyage ;
- le dispositif d'assemblage de l'adaptateur conforme au premier aspect de l'invention est situé longitudinalement dans l'ouverture centrale du capot. Le dispositif d'assemblage de l'adaptateur conforme au premier aspect de l'invention est situé latéralement entre des faces intérieures des deux côtés latéraux du capot. Plus particulièrement, le système d'indexation angulaire est situé longitudinalement dans l'ouverture principale du capot, et préférentiellement à l'aplomb du système d'attache. En outre, le système d'indexation angulaire est avantageusement centré latéralement par rapport aux côtés latéraux du capot. Selon une première alternative, le dispositif d'assemblage et/ou le système d'indexation est longitudinalement centré entre deux extrémités longitudinales du capot. Selon une deuxième alternative, le dispositif d'assemblage et/ou le système d'indexation angulaire est longitudinalement décentré par rapport aux extrémités longitudinales du capot afin de faciliter le montage et de permettre un détrompage du sens de montage du capot sur le palonnier principal ;

Selon l'invention, le système d'indexation angulaire du dispositif d'assemblage comprend (i) un axe qui s'étend en saillie par rapport à une face d'appui du capot ; et (ii) un organe de blocage vertical situé au niveau d'une extrémité libre de l'axe du système d'indexation angulaire, l'organe de blocage vertical étant configuré pour prendre une première configuration angulaire dans laquelle l'organe de blocage vertical permet une insertion du capot dans le palonnier principal et une deuxième configuration angulaire dans laquelle l'organe de blocage vertical permet une solidarisation du capot contre le palonnier principal. Selon l'invention, l'axe du système d'indexation angulaire est complété par l'organe de blocage vertical situé à l'extrémité libre de l'axe afin de permettre de réaliser l'assemblage du capot de l'adaptateur sur le palonnier de la monture par engagement de formes complémentaires. Plus particulièrement, l'axe du système d'indexation angulaire prend la forme d'une portée cylindrique qui s'étend verticalement en saillie et en dessous de la face d'appui du capot ;
- l'organe de blocage vertical du système d'indexation angulaire comprend (i) une première portée qui s'étend perpendiculairement par rapport à l'axe dudit système d'indexation angulaire et (ii) une deuxième portée qui s'étend perpendiculairement par rapport à l'axe dudit système d'indexation angulaire. Ainsi, selon un plan longitudinal au capot de l'adaptateur conforme au premier aspect de l'invention, les portées et l'axe de l'organe de blocage vertical forment ensemble un profil « en T » afin de faciliter un ancrage du capot sur le palonnier principal avec lequel l'adaptateur conforme au premier aspect de l'invention est destiné à collaborer ;
- de manière avantageuse, la première portée et la deuxième portée de l'organe de blocage vertical du système d'indexation angulaire sont situées symétriquement par rapport à l'axe dudit système d'indexation angulaire. Plus particulièrement, la première portée et la deuxième portée de l'organe de blocage vertical du système d'indexation angulaire sont réparties de manière diamétralement opposées par rapport à l'axe dudit système d'indexation angulaire. Selon une première variante de réalisation, la première portée et la deuxième portée de l'organe de blocage vertical du système d'indexation angulaire s'étendent longitudinalement par rapport au capot de l'adaptateur conforme au premier aspect de l'invention. Selon une deuxième variante de réalisation alternative à la première variante de réalisation, la première portée et la deuxième portée de l'organe de blocage vertical du système d'indexation angulaire s'étendent transversalement par rapport au capot de l'adaptateur conforme au premier aspect de l'invention ;
- afin de faciliter l'engagement de l'organe de blocage vertical du système d'indexation angulaire, avec le palonnier principal avec lequel l'adaptateur conforme au premier aspect de l'invention est destiné à collaborer, l'organe de blocage vertical du système d'indexation angulaire comprend une face de blocage située en regard de la face d'appui du capot. En d'autres termes, la face de blocage de l'organe de blocage vertical du système d'indexation angulaire est située à distance - non nulle - de la face d'appui du capot, et préférentiellement en dessous de ladite face d'appui relativement à l'axe vertical du capot. De manière préférentielle, la face de blocage de l'organe de blocage vertical est parallèle à la face d'appui du capot ;
- afin de faciliter la rotation du capot par rapport au palonnier principal lors de l'assemblage de l'adaptateur conforme au premier aspect de l'invention sur la monture de balai d'essuyage, la première et la deuxième portée de l'organe de blocage vertical du système d'indexation angulaire sont délimitées longitudinalement par une face circulaire ;
- de manière particulière, l'organe de blocage vertical du système d'indexation angulaire comprend une face de blocage située en regard de la face d'appui du capot, et la première et la deuxième portée de l'organe de blocage vertical du système d'indexation angulaire sont délimitées longitudinalement par une face circulaire ;
- la face circulaire des première et deuxième portées de l'organe de blocage vertical sont définies chacune par un premier rayon et par un deuxième rayon respectivement, relativement à l'axe dudit organe de blocage vertical. Cette configuration avantageuse permet de faciliter une rotation du capot autour de l'axe de l'organe de blocage vertical. Le premier rayon de la face circulaire de la première portée de l'organe de blocage vertical est avantageusement égal au deuxième rayon de la face circulaire de la deuxième portée dudit organe de blocage vertical.
- la première portée est prismatique et délimitée latéralement par deux côtés latéraux plans et parallèles entre eux ; la deuxième portée est délimitée latéralement par deux bord latéraux plans formant un angle supérieur à 0° entre eux, et préférentiellement compris entre 20° et 45° ;
- le système d'indexation angulaire du capot de l'adaptateur conforme au premier aspect de l'invention comprend un organe de calage latéral configuré pour permettre un alignement latéral du capot sur le palonnier principal avec lequel l'adaptateur conforme au premier aspect de l'invention est destiné à collaborer. En d'autres termes, l'organe de calage permet de solidariser le capot sur le palonnier principal lorsque ledit capot atteint une configuration angulaire prédéterminée : l'organe de calage latéral permettant de bloquer latéralement et dans cette configuration angulaire prédéterminée ledit capot par rapport audit palonnier principal. La configuration angulaire prédéterminée est définie par l'organe de calage latéral, dont des exemples de réalisation sont décrits ci-après ;
- l'organe de calage latéral du système d'indexation angulaire comprend au moins une - et préférentiellement deux - butée latérale située au niveau d'au moins un côté latéral du capot. En particulier, l'organe de calage latéral du système d'indexation angulaire comprend une première butée latérale située au niveau d'un premier côté latéral du capot et une deuxième butée latérale située au niveau d'un deuxième côté latéral opposé au premier côté latéral du capot ;
- la première butée latérale est située au niveau d'une première extrémité longitudinale du premier côté latéral du capot, et la deuxième butée latérale est située au niveau d'une deuxième extrémité longitudinale du deuxième côté latéral, ladite deuxième extrémité longitudinale étant située à l'opposé de la première extrémité longitudinale du premier côté latéral du capot. Cette configuration asymétrique par rapport à l'axe longitudinal du capot permet d'éviter un montage à l'envers dudit capot sur le palonnier principal avec lequel l'adaptateur conforme au premier aspect de l'invention est destiné à collaborer ;
- chaque butée latérale formant l'organe de calage latéral du système d'indexation angulaire prend la forme d'une languette dont un profil transversal est du type en « L », ladite butée latérale comprenant une portée d'élongation longitudinale qui s'étend en saillie depuis la face d'appui du capot et un rebord situé à une extrémité distale de la portée d'élongation longitudinale, ledit rebord s'étendant latéralement par rapport à ladite portée d'élongation longitudinale. En particulier, le rebord de chaque butée latérale s'étend en direction du côté latéral opposé du capot afin de permettre un engagement avec le palonnier principal avec lequel l'adaptateur conforme au premier aspect de l'invention est destiné à collaborer lors du mouvement de rotation du capot par rapport audit palonnier principal ;
- du fait du profil transversal en « L » des butées latérales, le rebord de chaque butée latérale comprend une surface de blocage située en regard de la face d'appui du capot. La surface de blocage est destinée à collaborer avec le palonnier principal, et plus particulièrement à être mise en appui vertical contre une face complémentaire du palonnier principal. Cette configuration avantageuse permet de réaliser un blocage du capot contre le palonnier principal ;
- de manière particulière, le rebord de chaque butée latérale s'étend en direction du côté latéral opposé du capot et comprend une surface de blocage située en regard de la face d'appui du capot. En d'autres termes, la surface de blocage du rebord des butées latérales formant l'organe de calage latéral du système d'indexation angulaire est située à distance de la face d'appui du capot, et préférentiellement en dessous de ladite face d'appui relativement à l'axe vertical du capot. De manière avantageuse, la surface de blocage de l'organe de calage latéral est parallèle à la face d'appui du capot ;
- la surface de blocage de l'organe de calage latéral est parallèle à la face de blocage de l'organe de blocage vertical. Préférentiellement, la surface de blocage de l'organe de calage latéral et la face de blocage de l'organe de blocage vertical sont coplanaires entre elles ;
- une face inférieure de l'organe de calage latéral - et préférentiellement une face inférieure du rebord de chaque organe de calage latéral - est parallèle à la face d'appui du capot ;
- le rebord de chaque organe de calage latéral comprend une face d'appui latéral parallèle au côté latéral correspondant du capot. La face d'appui latéral du rebord des organes de calage permet de définir une position angulaire de butée du capot contre le palonnier principal, définissant ainsi une configuration d'assemblage de l'adaptateur conforme au premier aspect de l'invention sur la monture de balai d'essuyage. Alternativement, la face d'appui latéral du rebord de chaque organe de calage latéral forme un angle non nul par rapport au côté latéral correspondant du capot ;
- l'adaptateur conforme au premier aspect de l'invention ou le capot et/ou le dispositif d'assemblage sont formés de plastique afin de réduire les coûts de fabrication. À titre d'exemple non limitatif, le capot de l'adaptateur et/ou le dispositif d'assemblage sont obtenus par moulage.

Selon un deuxième aspect de l'invention, il est proposé un balai d'essuyage de véhicule automobile comprenant un adaptateur conforme au premier aspect de l'invention ou selon l'un quelconque de ses perfectionnements, et une monture de balai d'essuyage, la monture comprenant (i) un palonnier principal sur lequel l'adaptateur est fixé de manière amovible et (ii) deux palonniers secondaires fixés au palonnier principal et supportant une lame d'essuyage.

L'adaptateur conforme au premier aspect de l'invention est ainsi accouplé à la monture au niveau de son palonnier principal, afin de rendre possible un accouplement ultérieur du balai d'essuyage avec un bras articulé de système d'essuyage. Ainsi, et comme expliqué auparavant, il est possible, à l'aide d'un unique volet de verrouillage, de choisir le capot qui correspond au bras articulé correspondant, afin de rendre compatible et à moindres coûts le balai d'essuyage conforme au deuxième aspect de l'invention avec une pluralité de types de systèmes d'essuyages.

Le balai d'essuyage conforme au deuxième aspect de l'invention peut comprendre avantageusement au moins un des perfectionnements ci-dessous, les caractéristiques techniques formant ces perfectionnements pouvant être prises seules ou en combinaison :
- le palonnier principal comprend une plateforme d'appui contre laquelle la face d'appui du capot est mise en appui. Cette configuration permet une mise en position précise du capot contre le palonnier principal. Elle permet en outre de mieux solidariser le capot contre le palonnier principal ;
- la plateforme d'appui du palonnier principal comprend une ouverture configurée pour permettre un engagement de l'axe et de l'organe de blocage vertical du système d'indexation angulaire du capot de l'adaptateur conforme au premier aspect de l'invention ou selon l'un quelconque de ses perfectionnements. Ainsi, l'ouverture de la plateforme d'appui collabore avec l'organe de blocage vertical du capot, afin de permettre un assemblage dudit capot sur le palonnier principal. En particulier, l'ouverture du palonnier principal est configurée pour accueillir l'organe de blocage vertical du capot afin de bloquer verticalement le capot de l'adaptateur conforme au premier aspect de l'invention par rapport au palonnier principal de la monture de balai d'essuyage. Avantageusement, l'ouverture est située longitudinalement au centre ou à proximité du centre du palonnier principal, et plus particulièrement au centre ou à proximité du centre de la plateforme d'appui du palonnier principal ;
- selon un mode particulièrement avantageux de l'invention, le palonnier principal comprend une plateforme d'appui contre laquelle la face d'appui du capot est mise en appui, ladite plateforme d'appui du palonnier principal comprenant une ouverture configurée pour permettre un engagement de l'axe et de l'organe de blocage vertical du système d'indexation angulaire ;

- afin de faciliter l'engagement de l'organe de blocage vertical du capot de l'adaptateur conforme au premier aspect de l'invention ou selon l'un quelconque de ses perfectionnements, une forme de l'ouverture correspond à une transformation homothétique du type d'un agrandissement d'une forme de l'axe et de l'organe de blocage vertical du système d'indexation angulaire. Cette configuration avantageuse permet en outre une insertion avec jeu dudit axe et dudit organe de blocage vertical dans l'ouverture ;
- selon une première variante de réalisation, l'ouverture du palonnier principal est orientée transversalement entre deux bords latéraux de la plateforme d'appui du palonnier principal. Cette première variante de réalisation est particulièrement intéressante lorsque l'organe de blocage vertical du capot de l'adaptateur conforme au premier aspect de l'invention est orienté longitudinalement entre deux extrémités longitudinales dudit capot. Selon une deuxième variante de réalisation, l'ouverture du palonnier principal est orientée longitudinalement entre deux extrémités longitudinales de la plateforme d'appui du palonnier principal. Cette deuxième variante de réalisation est particulièrement intéressante lorsque l'organe de blocage vertical du capot de l'adaptateur conforme au premier aspect de l'invention est orienté transversalement entre les deux côtés latéraux dudit capot ;
- l'ouverture traverse la plateforme d'appui du palonnier principal, en direction d'une face inférieure dudit palonnier principal. En d'autres termes, l'ouverture traverse de part en part le palonnier principal, relativement à l'axe vertical ;
- le palonnier principal comprend un logement d'indexation du capot de l'adaptateur par rapport audit palonnier principal, le logement d'indexation étant délimité radialement par une paroi cylindrique et délimitée verticalement par la plateforme d'appui. Le logement d'indexation forme ainsi un logement creux dans lequel l'organe de blocage vertical du capot peut s'insérer durant l'opération d'assemblage de l'adaptateur conforme au premier aspect de l'invention sur la monture du balai d'essuyage ;
- entre la paroi cylindrique du logement d'indexation du palonnier principal, une épaisseur verticale de la plateforme d'appui du palonnier principal est sensiblement égale à la distance séparant la face de blocage de l'organe de blocage vertical du système d'indexation angulaire et la face d'appui du capot. Cette configuration avantageuse permet de réaliser un blocage vertical du capot sur le palonnier principal dans la deuxième configuration angulaire du système d'indexation angulaire, par frottement entre la face de blocage de l'organe de blocage vertical du système d'indexation angulaire contre une face inférieure de la plateforme d'appui prise au niveau du logement d'indexation du palonnier principal ;
- le logement d'indexation du palonnier principal comprend au moins une butée d'indexation configurée pour collaborer avec l'organe de blocage vertical du système d'indexation angulaire du capot de l'adaptateur, afin de configurer ledit organe de blocage vertical dans sa deuxième configuration angulaire. L'au moins une butée d'indexation est située radialement à l'intérieur de la paroi cylindrique formant le logement d'indexation. En particulier, le logement d'indexation du palonnier principal comprend deux butées d'indexation diamétralement opposées l'une par rapport à l'autre, chaque butée d'indexation comprenant une face latérale en regard de l'autre et collaborant avec le bord latéral correspondant de portée associée de l'organe de blocage vertical du système d'indexation angulaire du capot de l'adaptateur. Les butées d'indexation permettent ainsi de réaliser un blocage angulaire du capot de l'adaptateur conforme au premier aspect de l'invention contre le palonnier principal de la monture de balai d'essuyage. En d'autres termes, les butées d'indexation permettent de définir la deuxième configuration angulaire du capot sur le palonnier et telle que décrite précédemment ;
- la plateforme d'appui du palonnier principal comprend au moins au moins un logement de calage latéral configuré pour permettre un engagement avec l'organe de calage latéral du système d'indexation angulaire du capot de l'adaptateur. En particulier, la plateforme d'appui comprend (i) un premier logement de calage latéral collaborant avec la première butée latérale de l'organe de calage, le premier logement de calage latéral étant situé au niveau d'un premier bord latéral de la plateforme d'appui, et (ii) un deuxième logement de calage latéral collaborant avec la deuxième butée latérale de l'organe de calage, le deuxième logement de calage latéral étant situé au niveau d'un deuxième bord latéral opposé au premier bord latéral de la plateforme d'appui ;

- le premier logement de calage latéral est situé au niveau d'une première extrémité longitudinale du premier bord latéral de la plateforme d'appui, et le deuxième logement de calage latéral est situé au niveau d'une deuxième extrémité longitudinale du deuxième bord latéral de la plateforme d'appui, ladite deuxième extrémité longitudinale étant située à l'opposé de la première extrémité longitudinale du premier bord latéral de la plateforme d'appui ;
- chaque logement de calage latéral collaborant avec l'organe de calage du système d'indexation angulaire du capot de l'adaptateur est délimité par :
   oune surface inférieure située verticalement à une distance de la plateforme d'appui supérieure à la distance séparant verticalement la face inférieure de l'organe de calage latéral du capot de la face d'appui dudit capot ; et/ou
   oune surface d'appui latéral située en retrait par rapport au bord latéral de la plateforme d'appui, ladite surface d'appui latéral de chaque logement de calage latéral étant destinée à être mise en appui contre la face d'appui latéral du rebord de chaque butée latérale formant l'organe de calage latéral du système d'indexation angulaire du capot de l'adaptateur ; et/ou
   odeux bords longitudinaux permettant une insertion de l'organe de calage latéral du système d'indexation angulaire du capot de l'adaptateur dans le logement de calage latéral correspondant, par un mouvement de rotation autour de l'axe dudit système d'indexation angulaire ;
- chaque logement de calage latéral comprend une lumière oblongue qui s'étend longitudinalement dans la surface d'appui latéral, de manière à permettre une insertion du rebord dans ladite lumière par un mouvement de rotation autour de l'axe du système d'indexation angulaire du capot de l'adaptateur. Dans le prolongement latéral de la lumière oblongue de chaque logement de calage latéral du palonnier principal, une épaisseur verticale de la plateforme d'appui du palonnier principal est sensiblement égale à la distance séparant la surface de blocage du rebord des butées latérales formant l'organe de calage latéral du système d'indexation angulaire et la face d'appui du capot. Cette configuration avantageuse permet de réaliser un blocage angulaire du capot sur le palonnier principal dans la deuxième configuration angulaire du système d'indexation angulaire, par frottement entre la surface de blocage de l'organe du rebord des butées latérales formant l'organe de calage latéral du système d'indexation angulaire du capot de l'adaptateur à une face inférieure de la plateforme d'appui prise au niveau de la lumière oblongue du palonnier principal ;
- le palonnier principal de la monture de balai d'essuyage est formé de plastique et/ou les palonniers secondaires sont avantageusement formés de plastique afin de réduire leur poids et/ou leur coût de fabrication.

Selon un troisième aspect de l'invention, il est proposé un système d'essuyage comprenant au moins un bras articulé fixé de manière détachable à l'adaptateur du balai d'essuyage conforme au deuxième aspect de l'invention ou selon l'un quelconque de ses perfectionnements, chaque bras articulé étant mobile en rotation autour d'un axe de rotation et selon un mouvement contrôlé par un moteur.

Plus particulièrement, chaque bras articulé est connecté à l'adaptateur du balai d'essuyage par l'intermédiaire du système d'attache dudit adaptateur, ledit système d'attache formant préférentiellement un ou plusieurs axes de liaison pivot tel que décrit précédemment. Cette configuration avantageuse permet ainsi d'améliorer le contact de la lame d'essuyage contre la paroi vitrée lorsque le système d'essuyage est mis en oeuvre sur un véhicule automobile par exemple. En outre, il est ainsi possible de détacher facilement le balai d'essuyage et, en adaptant le système d'attache amovible, de rendre un même balai d'essuyage compatible avec une pluralité de bras articulé différents.

Selon un quatrième aspect de l'invention, il est proposé un procédé d'assemblage de l'adaptateur conforme au premier aspect de l'invention ou selon l'un quelconque de ses perfectionnements, sur le palonnier principal d'un balai d'essuyage conforme au deuxième aspect de l'invention ou selon l'un quelconque de ses perfectionnements, le procédé d'assemblage comprenant les étapes suivantes :
- une étape d'insertion du système d'indexation angulaire du capot de l'adaptateur dans l'ouverture du palonnier principal de la monture de balai d'essuyage, ledit système d'indexation angulaire étant configuré, dans l'ouverture, et éventuellement dans le logement d'indexation, dans sa première configuration angulaire. En particulier, l'axe et l'organe de blocage vertical du système d'indexation angulaire du capot sont introduits verticalement - et avec jeu transversal et/ou longitudinal - dans l'ouverture du palonnier principal. En d'autres termes, le capot est pivoté - préférentiellement autour de son axe vertical - d'une manière telle que le système d'indexation angulaire soit aligné avec l'ouverture du palonnier principal afin de permettre son insertion, par complémentarité de leurs formes respectives ;
- une étape de mise en appui du capot de l'adaptateur contre le palonnier principal de la monture de balai d'essuyage. Plus particulièrement, la face d'appui du capot est mise en appui contre la plateforme d'appui du palonnier principal par un mouvement de translation du capot par rapport au palonnier principal, préférentiellement suivant l'axe vertical. Durant cette étape de mise en appui, l'axe et l'organe de blocage vertical du système d'indexation angulaire du capot sont introduits dans le logement d'indexation du palonnier principal ;
- successivement à l'étape de mise en appui, une étape de rotation du capot par rapport au palonnier principal afin de configurer le système d'indexation angulaire dudit capot dans le logement d'indexation dudit palonnier principal dans sa deuxième configuration angulaire, telle que décrite précédemment. Dans cette étape de rotation, le capot est maintenu en appui contre le palonnier principal. Plus particulièrement, le capot est avantageusement pivoté autour de l'axe du système d'indexation angulaire afin de faire pivoter l'axe et l'organe de blocage vertical du système d'indexation angulaire du capot par rapport à l'ouverture du palonnier principal, de manière à empêcher le capot de pouvoir être désolidarisé du palonnier principal par un simple mouvement vertical. Dans cette deuxième configuration angulaire du système d'indexation angulaire par rapport au logement d'indexation du palonnier, le capot est préférentiellement pivoté selon un angle compris entre 30° et 120°, avantageusement égal à 90°, de manière à ce que l'organe de blocage vertical soit pivoté selon un angle compris entre 30° et 120°, et préférentiellement égal à 90°, par rapport à l'ouverture ;

- durant l'étape de rotation du capot par rapport au palonnier principal, une étape d'engagement des rebords des butées latérales formant l'organe de calage latéral du capot dans les lumières oblongues correspondantes des logements de calage latéral du palonnier principal ;
- à l'issue de l'étape de rotation, et postérieurement à l'étape d'engagement, une étape de mise en butée latéral du capot contre le palonnier principal. En particulier, l'étape de mise en butée latéral comprend une étape de mise en butée latéral du système d'indexation angulaire du capot dans le logement d'indexation du palonnier principal. Plus précisément, les bords latéraux des portées de l'organe de blocage vertical du système d'indexation angulaire du capot sont mise en appui contre les faces latérales des butées d'indexation logées dans le logement d'indexation du palonnier principal.

Des modes de réalisation variés de l'invention sont prévus, intégrant selon l'ensemble des combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la [FIGURE 1A] et la [FIGURE 1B] illustrent des vues en perspectives d'un exemple de réalisation d'un capot d'un adaptateur conforme au premier aspect de l'invention ;
- la [FIGURE 1C] illustre une vue de profil suivant un plan transversal du capot illustré sur les FIGURES 1A et 1B ;
- la [FIGURE 2A] illustre une vue en perspective d'un exemple de réalisation d'un palonnier principal d'un balai d'essuyage conforme au deuxième aspect de l'invention ;
- la [FIGURE 2B] illustre une vue de détail et en perspective d'un logement d'indexation du palonnier principal illustré sur la FIGURE 2A ;
- la [FIGURE 2C] illustre une vue suivant un plan de coupe transversal TT du palonnier principal représenté sur la FIGURE 2A ;
- la [FIGURE 3A], la [FIGURE 3B] et la [FIGURE 3C] illustrent les étapes d'assemblage de l'adaptateur conforme au premier aspect de l'invention sur le palonnier principal d'une monture de balai d'essuyage, conformément au quatrième aspect de l'invention ;
- la [FIGURE 4] illustre une vue suivant un plan de coupe longitudinale LL du balai d'essuyage illustré sur la FIGURE 3C ;
- la [FIGURE 5] illustre de manière synoptique le procédé d'assemblage de l'adaptateur sur une monture de balai d'essuyage, conformément au quatrième aspect de l'invention et tel qu'illustré sur les FIGURES 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

Dans la description qui suit des figures, l'adjectif « longitudinal » fait référence à l'axe X et correspond à une direction d'élongation du capot suivant sa plus grande longueur. Par suite, les adjectifs « avant » et « arrière » font respectivement référence aux côtés gauche et droites des figures représentées. L'adjectif « transversal » ou « latéral » fait référence à l'axe Y et correspond à une direction d'élongation perpendiculaire à la direction longitudinale, et l'adjectif « vertical » fait référence à l'axe Z et correspond à une direction simultanément perpendiculaire à la direction longitudinale et à la direction transversale. Les adjectifs « inférieur » et « supérieur » font respectivement références aux bords inférieurs et supérieurs des figures représentées.

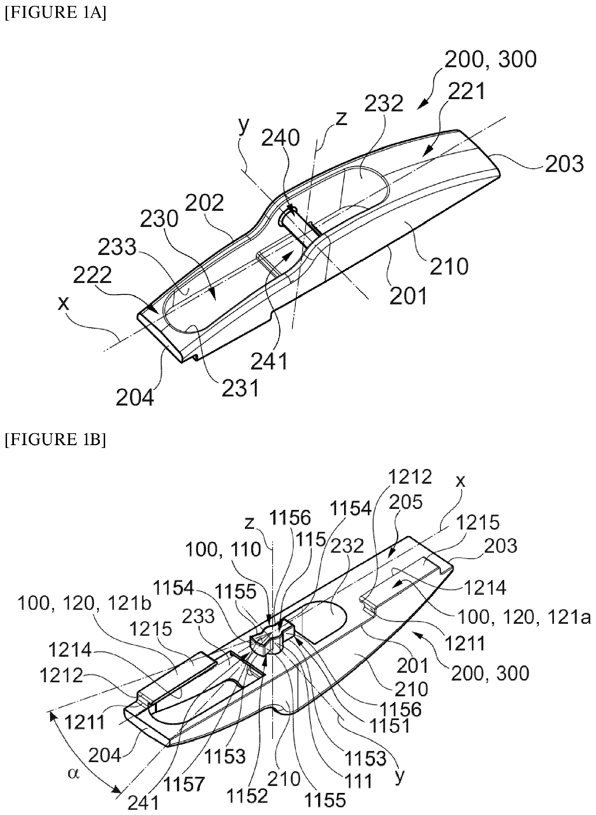

En référence aux FIGURES 1A à 1C, l'invention selon son premier aspect a trait à un adaptateur 300 pour fixation d'une monture 400 de balai d'essuyage 500 sur un bras articulé de balai d'essuyage. L'adaptateur 300 conforme au premier aspect de l'invention comprend un capot 200 configuré pour être fixé de manière amovible à un palonnier principal 410 de la monture 400 de balai d'essuyage 500, et un dispositif d'assemblage 100 du capot 200 sur le palonnier principal 410 de la monture 400 de balai d'essuyage 500, le dispositif d'assemblage 100 comprenant un système d'indexation angulaire 110 configuré pour permettre un assemblage du capot 200 sur le palonnier principal 410 par rotation dudit capot 200 par rapport audit palonnier principal 410.

Le capot 200 de l'adaptateur 300 conforme au premier aspect de l'invention prend la forme d'un module boutonnière d'élongation suivant l'axe longitudinal X. Le capot 200 a une forme allongée et étroite : il s'étend longitudinalement entre une face arrière 203 et une face avant 204, et il est délimité latéralement par deux côtés latéraux 210. Les deux côtés latéraux 210 sont avantageusement parallèles entre eux. Relativement à l'axe vertical Z, le capot 200 est délimité par un bord inférieur 201 et un bord supérieur 202.

Le bord inférieur 201 du capot 200 forme une face d'appui 205 destinée à être mise en appui contre la palonnier principal 410 de la monture 400 de balai d'essuyage lorsque l'adaptateur 300 correspondant est accouplé à ladite monture 400. La face d'appui 205 est avantageusement plane ; en outre elle s'étend suivant un plan horizontal formé par l'axe longitudinal X et l'axe transversal Y. En d'autres termes, la face d'appui 205 est sensiblement perpendiculaire aux côtés latéraux 210 du capot 200. Le bord supérieur 202 du capot 200 forme une surface courbe, contrainte par des considérations aérodynamiques et pour permettre un couplage optimal du bras articulé de balai d'essuyage à l'adaptateur 300.

Entre ses deux côtés latéraux 210 le capot 200 comprend une ouverture centrale 230 de forme oblongue. L'ouverture centrale 230 est traversante : elle débouche simultanément au niveau du bord supérieur 202 et du bord inférieur 201 du capot 200. L'ouverture centrale 230 du capot 200 est délimitée longitudinalement par deux surfaces courbes formant des flancs avant 231 et arrière 232 de ladite ouverture centrale 230. Latéralement, l'ouverture centrale 230 du capot 200 est délimitée des faces intérieures 233 des côtés latéraux 210 du capot 200.

Longitudinalement, le capot 200 comprend un nez avant 222 et un nez arrière 221 qui encadrent ensemble l'ouverture centrale 230 relativement à l'axe longitudinal X. En d'autres termes le nez arrière 221 est situé entre l'ouverture centrale 230 et la face arrière 203 du capot 200 ; et le nez avant 222 est situé entre l'ouverture centrale 230 et la face avant 204 du capot 200. Comme visible respectivement sur la FIGURE 1A, les nez avant 222 et arrière 221 du capot 200 forment une surface pleine au niveau du bord supérieur 202 dudit capot 200. Cette configuration avantageuse permet d'améliorer les performances aérodynamiques de l'adaptateur lorsqu'il est monté sur la monture 400 d'un balai d'essuyage.

Afin de collaborer avec le bras du balai d'essuyage avec lequel l'adaptateur 300 conforme au premier aspect de l'invention est destiné à collaborer, le capot 200 comprend un axe de liaison pivot 240. L'axe de liaison pivot 240 s'étend latéralement entre les côtés latéraux 210 du capot 200. Plus particulièrement, l'axe de liaison pivot s'étend latéralement au travers de l'ouverture centrale 230 et entre les faces intérieures 233 des côtés latéraux 210.

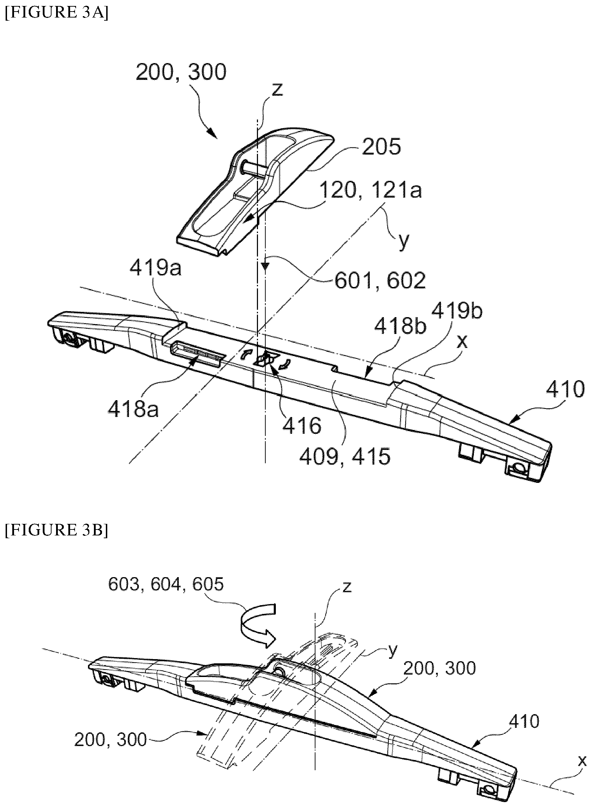

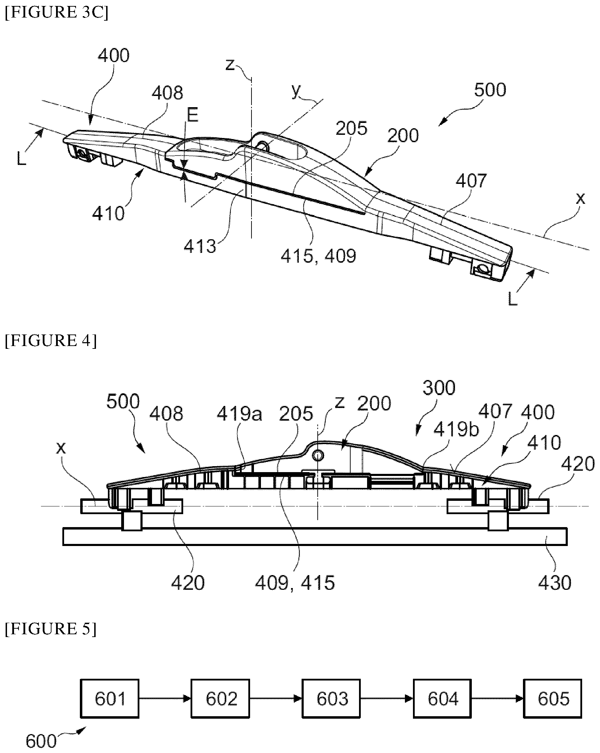

Afin de permettre un couplage mécanique de l'adaptateur 300 avec le palonnier principal 410 de la monture 400 de balai d'essuyage 500 avec laquelle il est destiné à collaborer, le système d'indexation angulaire 110 du dispositif d'assemblage 100 comprend :
- un axe 111 qui s'étend en saillie par rapport à la face d'appui 205 du capot 200 ; et
- un organe de blocage vertical 115 situé au niveau d'une extrémité libre de l'axe 111, afin de permettre un couplage mécanique avec le palonnier principal 410, comme il sera décrit ultérieurement en référence aux FIGURES 3.

L'axe 111 du système d'indexation angulaire 110 prend la forme d'une portée cylindrique qui s'étend verticalement en saillie et en dessous de la face d'appui 205 du capot 200, au niveau d'une plateforme 241 qui s'étend latéralement entre les deux côtés latéraux 210 du capot et à l'aplomb de l'axe de liaison pivot 240.

Dans l'exemple illustré sur les FIGURES 1A à 1C, l'organe de blocage vertical 115 comprend :
- une première portée 1151 qui s'étend perpendiculairement par rapport à l'axe 111 du système d'indexation angulaire 110 ; et
- une deuxième portée 1152 qui s'étend perpendiculairement par rapport à l'axe 111 du système d'indexation angulaire 110.

Ainsi, selon un plan longitudinal au capot 200, les portées 1151, 1152 et l'axe 111 de l'organe de blocage vertical 110 forment ensemble un profil « en T » qui permet de faciliter un ancrage du capot 200 sur le palonnier principal 410 avec lequel l'adaptateur 300 est destiné à collaborer.

La première portée 1151 et la deuxième portée 1152 sont situées symétriquement par rapport à l'axe 111 du système d'indexation angulaire 110 : elles sont réparties de manière diamétralement opposées par rapport à l'axe 111 dudit système d'indexation angulaire 110. Plus particulièrement, la première portée 1151 et la deuxième portée 1152 de l'organe de blocage vertical 115 s'étendent suivant l'axe longitudinal X du capot 200.

Chaque portée 1151, 1152 de l'organe de blocage vertical 115 comprend une face de blocage 1153 qui permet de collaborer avec le palonnier principal 410. La face de blocage 1153 de l'organe de blocage vertical 115 est située à distance non nulle de la face d'appui 205 du capot 200, relativement à l'axe vertical Z. La face de blocage 1153 de l'organe de blocage vertical 115 est située en regard de la face d'appui 205 du capot 200. Dans l'exemple illustré sur les FIGURES 1A à 1C, la face de blocage 1153 de l'organe de blocage vertical 115 est parallèle à la face d'appui 205 du capot 200.

Relativement à l'axe longitudinal X, la première portée 1151 et la deuxième portée 1152 de l'organe de blocage vertical 115 sont délimitées par une face circulaire 1154. Dans l'exemple illustré sur les FIGURES 1A à 1C, les faces circulaires 1154 des première 1151 et deuxième 1152 portées de l'organe de blocage vertical 115 partagent un même rayon : elles forment ensemble une surface cylindrique qui s'étend suivant l'axe 111 dudit organe de blocage vertical 115.

Verticalement, l'organe de blocage vertical 115 est délimité par une face inférieure 1157 plane et parallèle à la face d'appui 205 du capot 200. Avantageusement, et comme visible sur la FIGURE 1B, la face inférieure 1157 de l'organe de blocage vertical 115 forme une unique surface plane commune aux deux portées 1151, 1152 dudit organe de blocage vertical 115.

La première portée 1151 de l'organe de blocage vertical 115 est prismatique : elle est délimitée latéralement par deux côtés latéraux 1156 plans et parallèles entre eux. Avantageusement, les côtés latéraux 1156 de la première portée 1151 sont parallèles au côtés latéraux 210 du capot 200.

La deuxième portée 1152 de l'organe de blocage vertical 115 est délimitée latéralement par deux bords latéraux 1155 plans qui ne sont pas parallèles entre eux : ils forment ensemble un angle α qui est supérieur à 0° et approximativement égal à 30° dans l'exemple illustré sur les FIGURES 1A à 1C.

Afin de permettre un alignement latéral du capot 200 sur le palonnier principal 410 avec lequel l'adaptateur 300 est destiné à collaborer, le système d'indexation angulaire 110 du capot 200 comprend un organe de calage latéral 120 : l'organe de calage latéral 120 permet de solidariser le capot 200 sur le palonnier principal 410 lorsque ledit capot 200 a été configuré dans une configuration angulaire prédéterminée de blocage, telle qu'il sera décrit en référence aux FIGURES 3.

À cet effet, l'organe de calage latéral 120 comprend deux butées latérales 121a, 121b situées chacune sur l'un des côtés latéraux 210 du capot 200 : une première butée latérale 121a est située au niveau d'un premier côté latéral 210 du capot 200 et une deuxième butée latérale 121b est située au niveau d'un deuxième côté latéral 210 opposé au premier côté latéral 210. Plus particulièrement, chacune des butées latérales 121a, 121b formant l'organe de calage latéral 120 est situé à proximité d'une extrémité longitudinale du capot 200 : la première butée latérale 121a est située longitudinalement au niveau de la face arrière 203 du capot 200 ; et la deuxième butée latérale 121b est située longitudinalement au niveau de la face avant 204 dudit capot 200. Cette distribution asymétrique des butées latérales 121a, 211b par rapport à l'axe longitudinal X du capot 200 permet d'engager les butées latérales avec le palonnier principal 410 avec lequel l'adaptateur 300 est destiné à collaborer par un simple mouvement de rotation.

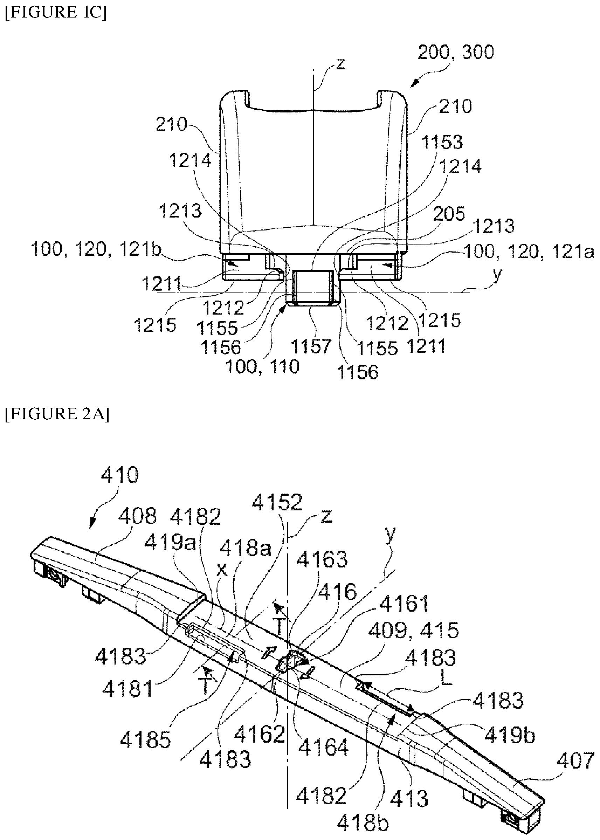

Comme visible sur les FIGURES 1B et 1C, chaque butée latérale 121a, 121b formant l'organe de calage latéral 120 du système d'indexation angulaire 110 prend la forme d'une languette dont un profil transversal est du type en « L » : chaque butée latérale 121a, 121b comprend :
- une portée d'élongation longitudinale 1211 qui s'étend en saillie depuis la face d'appui 205 du capot 200 ; et
- un rebord 1212 situé à une extrémité distale de la portée d'élongation longitudinale 1211 et qui s'étend latéralement par rapport à la portée d'élongation longitudinale 1211.

Verticalement, l'organe de calage latéral 120 est délimité par une face inférieure 1215. La face inférieure 1215 délimite notamment verticalement le rebord 1212 de chaque butée latérale 121a, 121b formant l'organe de calage latéral 120. Comme visible sur les FIGURES 1B et 1C, la face inférieure 1215 de l'organe de calage latéral 120 est parallèle à la face d'appui 205 du capot 200.

Le rebord 1212 de chaque butée latérale 121a, 121b comprend une surface de blocage 1213 située en regard de la face d'appui 205 du capot 200. La surface de blocage 1213 est destinée à collaborer avec le palonnier principal 410 afin de réaliser un appui vertical contre une face complémentaire du palonnier principal 410 afin de réaliser un couplage mécanique du capot 200 contre le palonnier principal 410 par frottements. La surface de blocage 1213 des rebords 1212 de chaque butée latérale 121a, 121b formant l'organe de calage latéral 120 est située verticalement est située verticalement au-dessus de la face de blocage 1153 de l'organe de blocage vertical 115 du système d'indexation angulaire 110. En d'autres termes, la surface de blocage 1213 est située verticalement dans une position intermédiaire entre la face de blocage 1153 et la face d'appui 205 du capot 200.

Alternativement, la face de blocage 1153 est située verticalement dans une position intermédiaire entre la surface de blocage 1213 et la face d'appui 205 du capot 200. Alternativement encore, la face de blocage 1153 est située verticalement dans un même plan que la surface de blocage 1213.

En particulier, le rebord de chaque butée latérale s'étend en direction du côté latéral opposé du capot afin de permettre un engagement avec le palonnier principal avec lequel l'adaptateur conforme au premier aspect de l'invention est destiné à collaborer lors du mouvement de rotation du capot par rapport audit palonnier principal ;
Le rebord 1212 de chaque butée latérale 121a, 121b formant l'organe de calage latéral 120 est délimité latéralement au niveau d'une extrémité libre par une face d'appui latéral 1214. La face d'appui latéral 1214 de chaque butée latérale 121a, 121b est avantageusement parallèle au côté latéral 210 correspondant du capot 200.

Pour chaque butée latérale 121a, 121b, le rebord 1212 s'étend latéralement en direction du côté latéral 210 opposé du capot 200, par rapport au côté latéral 210 à partir duquel la butée latérale 121a, 121b est formée : la face d'appui latéral 1214 de chaque butée latérale 121a, 121b est orientée latéralement du côté de l'ouverture centrale 230 du capot 200.

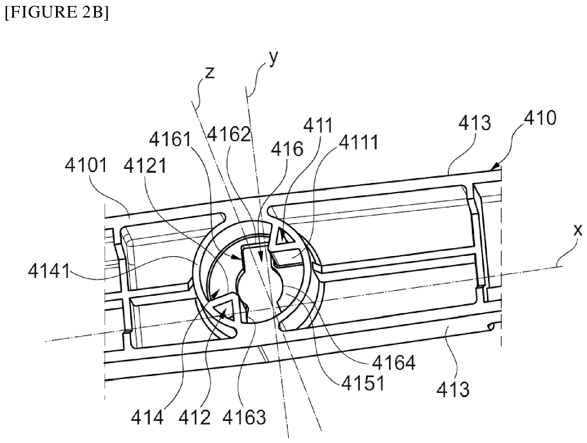

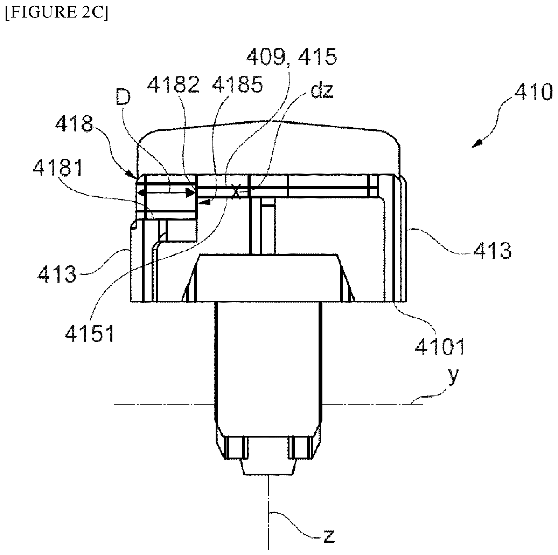

En référence aux FIGURES 2A, 2B et 2C, un exemple de réalisation d'un palonnier principal 410 d'une monture 400 de balai d'essuyage 500 va maintenant être décrit, le palonnier principal 410 étant configuré pour collaborer avec l'adaptateur 300 tel que décrit précédemment.

Le palonnier principal 410 de la monture 400 de balai d'essuyage prend une forme allongée suivant l'axe longitudinal X et plus étroite suivant l'axe transversal Y et l'axe vertical Z. Relativement à l'axe longitudinal X, le palonnier principal 410 comprend une zone centrale 409 délimitée longitudinalement par un nez avant 408 et un nez arrière 407. La zone centrale 409 du palonnier principal 410 est configurée pour collaborer avec l'adaptateur 300, et plus particulièrement avec le capot 200 tel que décrit précédemment : la zone centrale 409 prend la forme d'une plateforme 415 d'appui pour le capot 200. La plateforme d'appui 415 est délimitée longitudinalement par une extrémité longitudinale arrière 419b et une extrémité longitudinale avant 419a.

Dans l'exemple illustré sur la FIGURES 2A, les extrémités longitudinales avant 419a et arrière 419b prennent la forme d'un segment linéaire. Alternativement, afin de faciliter l'insertion de l'adaptateur 300 sur la plateforme d'appui 415 du palonnier principal 410 par un mouvement de rotation autour de l'axe vertical Z, les extrémités longitudinales avant 419a et arrière 419b peuvent prendre la forme d'un segment circulaire dont un centre est situé au niveau de l'axe 111 du système d'indexation angulaire 110 du dispositif d'assemblage 100 de l'adaptateur 300.

Le nez avant 408 et le nez arrière 407 sont configurée pour collaborer avec des palonniers secondaires 420 et comprennent des moyens de fixation détachables desdits palonniers secondaires 420 sur le palonnier principal 410.

Une dimension transversale de la zone centrale 409 du palonnier principal 410 est égale à une dimension transversale du capot 200 de l'adaptateur 300. Plus particulièrement, des bords latéraux 413 de la zone centrale 409 sont avantageusement situés dans le prolongement des côtés latéraux 210 du capot 200. Préférentiellement, et comme visible sur la FIGURE 3C, les bords latéraux 413 de la zone centrale 409 sont coplanaires avec les côtés latéraux 210 du capot 200 et avec les côtés latéraux 120.

Une dimension longitudinale de la zone centrale 409 est telle qu'elle permet d'insérer le capot 200 entre le nez avant 408 et le nez arrière 407 du palonnier principal 410 selon le procédé d'assemblage qui sera décrit ci-après en référence aux FIGURES 3. Plus particulièrement, lorsque l'adaptateur 300 est assemblé sur le palonnier principal 410, la face d'appui 205 et le bord inférieur 121 du capot 200 sont en appui vertical contre la plateforme d'appui 415.

Selon l'invention, le capot 200 et le palonnier principal 410 sont configurés pour permettre un couplage mécanique de l'adaptateur 300 sur la monture 400 par un mouvement de rotation relatif dudit capot 200 par rapport audit palonnier principal 410.

À cet effet, la plateforme 415 d'appui du palonnier principal 410 comprend une ouverture 416 configurée pour permettre une insertion sans jeu de l'axe 111 et de l'organe de blocage vertical 115 du système d'indexation angulaire 110 du capot 200, et pour une première configuration angulaire dudit capot 200 par rapport au palonnier principal 410, comme il sera décrit relativement aux FIGURES 3. Comme visible sur les FIGURES 2A et 2B, l'ouverture 416 est délimitée par un contour périphérique 4161 qui reprend la forme de l'axe 111 et de l'organe de blocage vertical 115 du système d'indexation angulaire 110 du capot 200. Plus précisément, le contour périphérique 4161 correspond à une transformation homothétique de la forme de l'axe 111 et de l'organe de blocage vertical 115 du système d'indexation angulaire 110. La transformation homothétique est avantageusement du type d'un agrandissement afin de permettre une insertion sans frottement du système d'indexation angulaire 110 dans l'ouverture 416. À titre d'exemple non limitatif, un jeu entre le système d'indexation angulaire 110 et l'ouverture 416 est de l'ordre du dixième de millimètres.

Dans l'exemple illustré sur les FIGURES2A et 2B, le contour 4161 de l'ouverture 416 comprend donc une partie circulaire 4164 située au centre et encadrée latéralement par deux parties allongées 4162, 4163 :
- une première partie allongée 4162 a une forme rectangulaire semblable à la première portée 1151 de l'organe de blocage vertical 115, ladite première partie allongée 4162 étant terminée - au niveau d'une extrémité distale par rapport à la partie circulaire 4164 - par un contour circulaire, semblable à la face circulaire 1154 de la première portée 1151 de l'organe de blocage vertical 115 ;
- une deuxième partie allongée 4163 a une forme trapézoïdale semblable à la deuxième portée 1152 de l'organe de blocage vertical 115, ladite deuxième partie allongée 4163 étant terminée - au niveau d'une extrémité distale par rapport à la partie circulaire 4164 - par un contour circulaire, semblable à la face circulaire 1154 de la deuxième portée 1152 de l'organe de blocage vertical 115.

Comme visible sur les FIGURES 2A et 2B, l'ouverture 416 du palonnier principal 410 est orientée transversalement entre deux bords latéraux 413 de la plateforme d'appui 415 du palonnier principal 410. Plus particulièrement, la première partie allongée 4162 du contour 4161 délimitant l'ouverture 416 est située latéralement à l'opposé de la deuxième partie allongée 4163 dudit contour 4161 par rapport à la partie circulaire 4164 du contour 4161. Cette orientation transversale de l'ouverture 416 permet, en collaboration avec une élongation longitudinale de l'organe de blocage vertical 115 du capot 200 de l'adaptateur 300 permet ainsi de définir une configuration angulaire d'engagement du capot 200 sur le palonnier 410, c'est-à-dire une configuration angulaire d'engagement de l'organe de blocage vertical 115 dans l'ouverture 416 : cette configuration angulaire d'engagement correspond à un angle de 90° suivant l'axe vertical Z entre le capot 200 et le palonnier principal 410.

L'ouverture 416 est située longitudinalement à proximité du centre du palonnier principal 416, et plus particulièrement à proximité du centre de la plateforme d'appui 416 du palonnier principal 410.

Comme visible sur la FIGURE 2B, l'ouverture 416 traverse la plateforme d'appui 415 du palonnier principal 410, suivant l'axe vertical Z, en direction d'une face inférieure 4101 dudit palonnier principal 410. En d'autres termes, l'ouverture 416 est débouchant, suivant l'axe vertical Z.

En référence à la FIGURE 2B, le palonnier principal 410 comprend un logement d'indexation 414 dans lequel l'organe de blocage vertical 115 du dispositif d'assemblage 100 du capot 200 peut s'insérer durant l'opération d'assemblage de l'adaptateur 300 conforme au premier aspect de l'invention sur la monture 400 du balai d'essuyage 500. Le logement d'indexation 414 forme ainsi un logement creux délimité radialement par une paroi cylindrique 4141 et délimitée verticalement par une face inférieure 4151 de la plateforme d'appui 415. La paroi cylindrique 4141 forme un contour circulaire coaxial avec la partie circulaire 4164 du contour 4161 de l'ouverture 416.

En particulier, une épaisseur verticale de la plateforme d'appui 415 du palonnier principal 410 - prise entre (i) sa face supérieure 4152 contre laquelle la face d'appui 205 du capot 200 est mise en appui et (ii) la face inférieure 4151 de la plateforme d'appui 415 - est sensiblement égale à la distance séparant la face de blocage 1153 de l'organe de blocage vertical 115 du système d'indexation angulaire 110 et la face d'appui 205 du capot 200. Cette configuration avantageuse permet de réaliser un blocage vertical du capot 200 contre le palonnier principal 410, par frottement entre la face de blocage 1153 de l'organe de blocage vertical 115 du système d'indexation angulaire 110 contre la face inférieure 4151 de la plateforme d'appui 415 prise entre les parois cylindriques 4141 du logement d'indexation 414 du palonnier principal 410.

Comme visible sur la FIGURE 2B, le logement d'indexation 414 du palonnier principal 410 comprend une première butée d'indexation 411 et une deuxième butée d'indexation 412, les butées d'indexation 411, 412 étant configurées pour collaborer avec l'organe de blocage vertical 115 du système d'indexation angulaire 110 du capot 200 de l'adaptateur 300. Plus particulièrement :
- la première butée d'indexation 411 est configurée pour collaborer respectivement avec l'un des bords latéraux 1155 de la deuxième portée 1152 de l'organe de blocage vertical 115 du capot 200. Cette collaboration prend la forme d'un appui plan du bord latéral 1155 contre un flanc latéral 4111 de la première butée d'indexation 411, lorsque le système d'indexation angulaire 110 du capot 200 est configuré dans sa deuxième configuration angulaire vis-à-vis du palonnier principal 410 ; et
- la deuxième butée d'indexation 412 est configurée pour collaborer respectivement avec l'un des côtés latéraux 1156 de la première portée 1151 de l'organe de blocage vertical 115 du capot 200. Cette collaboration prend la forme d'un appui plan du côté latéral 1156 contre un flanc latéral 4121 de la deuxième butée d'indexation 412, lorsque le système d'indexation angulaire 110 du capot 200 est configuré dans sa deuxième configuration angulaire vis-à-vis du palonnier principal 410.

Ainsi, le flanc latéral 4111 de la première butée d'indexation 411 et le flanc latéral 4121 de la deuxième butée d'indexation 412 définissent ensemble la deuxième configuration angulaire du système d'indexation angulaire 110 par rapport au palonnier principal 410.

La première butée d'indexation 411 est située du côté de la première partie allongée 4162 du contour 4161 délimitant l'ouverture 416, et le flanc latéral 4111 de la première butée d'indexation 411 est situé à proximité de la partie circulaire 4164 dudit contour 4161. Le flanc latéral 4111 de la première butée d'indexation 411 est parallèle aux bords latéraux 431 du palonnier principal 410.

La deuxième butée d'indexation 412 est située du côté de la deuxième partie allongée 4163 du contour 4161 délimitant l'ouverture 416, et le flanc latéral 4121 de la deuxième butée d'indexation 412 est situé à proximité de la partie circulaire 4164 dudit contour 4161. Le flanc latéral 4121 de la deuxième butée d'indexation 412 forme un angle non nul par avec l'un des bords latéraux 431 du palonnier principal 410.

Longitudinalement, la première butée d'indexation 411 et la deuxième butée d'indexation 412 sont situées de part et d'autre de la partie circulaire 4164 du contour 4161 délimitant l'ouverture 416.

Comme visible sur les FIGURES 2A et 2C, la plateforme d'appui 415 du palonnier principal 410 comprend deux logements de calage latéral 418a, 418b configurés pour permettre un engagement avec l'organe de calage latéral 120 du système d'indexation angulaire 110 du capot 200 de l'adaptateur 300. En particulier, la plateforme d'appui 415 comprend :
- un premier logement de calage latéral 418b collaborant avec la première butée latérale 121a de l'organe de calage 120, le premier logement de calage latéral 418b étant situé au niveau d'un premier bord latéral 413 de la plateforme d'appui 415 ; et
- un deuxième logement de calage latéral 418a collaborant avec la deuxième butée latérale 121b de l'organe de calage 120, le deuxième logement de calage latéral 418a étant situé au niveau d'un deuxième bord latéral 413 opposé au premier bord latéral de la plateforme d'appui 415.

Ainsi, lorsque l'adaptateur 300 est assemblé sur le palonnier principal 410 de la monture 400 de balai d'essuyage 500, durant le mouvement de rotation, chaque butée latérale 121a, 121b du capot 200 s'engage dans le logement de calage latéral 418a, 418b situé en regard sur le palonnier principal 410.

Le premier logement de calage latéral 418b est situé au niveau de l'extrémité longitudinale arrière 419b de la plateforme d'appui 415, et le deuxième logement de calage latéral 418a est situé au niveau de l'extrémité longitudinale avant 419a de la plateforme d'appui 415.

Chaque logement de calage latéral 418a, 481b collaborant avec l'organe de calage 120 du système d'indexation angulaire 110 du capot 200 est délimité par :
- une surface inférieure 4181 parallèle à la plateforme d'appui 415. La surface inférieure 4181 de chaque logement de calage latéral 418a, 418b est située verticalement en dessous de la plateforme d'appui 415. Plus particulièrement, la surface inférieure 4181 de chaque logement de calage latéral 418a, 418b est située verticalement à une distance supérieure à la distance séparant verticalement (i) la face inférieure 1215 des butées latérales 121a, 121b formant l'organe de calage latéral 120 du capot 200 de (ii) la face d'appui 205 dudit capot 200. Cette configuration permet ainsi d'obtenir un jeu vertical E non nul et visible sur la FIGURE 3C lorsque l'adaptateur est couplé au palonnier principal 410 afin d'éviter un hyperstatisme et réduire les coûts de fabrication du capot 200 et/ou du palonnier principal 410 ; et
- une surface d'appui latéral 4182 située en retrait par rapport au bord latéral 413 correspondant de la plateforme d'appui 415. La surface d'appui latéral 4182 de chaque logement de calage latéral 418a, 418b est destinée à être mise en appui contre la face d'appui latéral 1214 du rebord 1212 de chaque butée latérale 121a, 121b formant l'organe de calage latéral 120 du système d'indexation angulaire 110 du capot 200 de l'adaptateur 300. La surface d'appui latéral 4182 du palonnier principal 410 est avantageusement parallèle aux bords latéraux 413 dudit palonnier principal 410. En outre, une distance latérale D, prise suivant l'axe transversal Y, entre (i) le bord latéral 413 du palonnier principal 410 contre lequel le logement de calage latéral 418a, 418b correspondant est formé et (ii) la surface d'appui latéral 4182 dudit logement de calage latéral 418a, 418b correspondant est avantageusement identique pour les deux logements de calage latéral 418a, 418b ; et
- deux bords longitudinaux 4183 distants l'un de l'autre suivant l'axe longitudinal X afin de permettre une insertion de l'organe de calage latéral 120 du système d'indexation angulaire 110 du capot 200 de l'adaptateur 300 dans le logement de calage latéral 418a, 418b correspondant du palonnier principal 410, par un mouvement de rotation autour de l'axe 111 dudit système d'indexation angulaire 110. Plus particulièrement, une longueur longitudinale L entre les deux bords longitudinaux 4183 de chaque logement de calage latéral 418a, 418b est légèrement supérieur à une longueur longitudinale des butées latérales 121a, 121b formant l'organe de calage latéral 120 du système d'indexation angulaire 110 du capot 200 de l'adaptateur 300 afin de permettre une insertion sans jeu. Dans l'exemple illustré sur les FIGURES 2, les bords longitudinaux 4183 sont rectilignes. Alternativement, les bords longitudinaux 4183 ont une forme d'arc de cercle, centré sur l'ouverture 416 du palonnier principal 410.

Comme visible sur les FIGURES 2A et 2C, chaque logement de calage latéral 418a, 418b comprend une lumière oblongue 4185 qui s'étend longitudinalement dans la surface d'appui latéral 4182, de manière à permettre une insertion du rebord 1212 de la butée latérale 121a, 121b correspondante formant l'organe de calage latéral 120 du capot 200 dans ladite lumière oblongue 4185, lors de l'accouplement mécanique du capot 200 de l'adaptateur 300 avec le palonnier principal 410. Dans le prolongement latéral de la lumière oblongue 4185 de chaque logement de calage latéral 418a, 418b du palonnier principal 410, une épaisseur verticale dZ de la plateforme d'appui 415 du palonnier principal 410 est sensiblement égale à la distance séparant (i) la surface de blocage 1213 du rebord 1212 des butées latérales 121a, 121b formant l'organe de calage latéral 120 du système d'indexation angulaire 110 à (ii) la face d'appui 205 du capot 200, afin de permettre de réaliser un blocage angulaire du capot 200 sur le palonnier principal 410 à l'issu du mouvement de rotation autour de l'axe vertical Z de l'adaptateur 300 par rapport au palonnier principal 410, par frottements entre la surface de blocage 1213 et une face inférieure 4151 de la plateforme d'appui 415 prise au niveau de la lumière oblongue 4185 du palonnier principal 410.

En référence aux FIGURES 3 à 5, un procédé d'assemblage 600 de l'adaptateur 300 sur la monture 400 de balai d'essuyage 500 est décrit, conformément au quatrième aspect de l'invention. En complément, les FIGURES 3A à 3C illustrent la réalisation des étapes - représentées par des flèches - du procédé d'assemblage 600 du balai d'essuyage 500, et la FIGURE 5 illustre un diagramme synthétique dudit procédé d'assemblage 600.

Un tel balai d'essuyage 500 conforme au deuxième aspect de l'invention comprend un adaptateur 300 conforme au premier aspect de l'invention et une monture 400 comprenant :
- un palonnier principal 410 du type de celui décrit précédemment en référence aux FIGURES 2 et sur lequel l'adaptateur 300 est fixé de manière amovible ;
- deux palonniers secondaires 420 fixés solidairement au palonnier principal 410 et supportant une lame d'essuyage 430 destinée à racler une paroi vitrée d'un véhicule automobile afin de pouvoir en évacuer l'eau présente à sa surface.

En référence à la FIGURE 5 principalement, et tel que représenté par des flèches d'assemblage sur les FIGURES 3A à 3C, le procédé d'assemblage 600 de l'adaptateur 300 conforme au premier aspect de l'invention sur une monture 400 de balai d'essuyage 500 comprend les étapes suivantes :
- une étape 601 d'insertion du système d'indexation angulaire 110 du capot 200 de l'adaptateur 300 dans l'ouverture 416 du palonnier principal 410 de la monture 400 de balai d'essuyage 500, tandis que le système d'indexation angulaire 110 et/ou le capot 200 est configuré, dans l'ouverture 416 du palonnier principal 410, dans sa première configuration angulaire. Comme visible sur la FIGURE 3A, le capot 200 est pivoté à 90° par rapport au palonnier principal 410 afin de faire correspondre les orientations de l'axe 111 et l'organe de blocage vertical 115 du capot 200 avec l'ouverture 416 du palonnier principal 410. Consécutivement, tel que décrit précédemment, l'axe 111 et l'organe de calage vertical 115 du capot sont introduits verticalement - et avec jeu transversal et/ou longitudinal - dans l'ouverture 416 du palonnier principal 410 ;
- une étape 602 de mise en appui du capot 200 de l'adaptateur 300 contre le palonnier principal 410 de la monture 400 de balai d'essuyage 500. Plus particulièrement, la face d'appui 205 du capot 200 est mise en appui contre la plateforme d'appui 415 du palonnier principal 410 par un mouvement de translation rectiligne du capot 200 par rapport au palonnier principal 410 suivant l'axe vertical Z. Durant cette étape 602 de mise en appui, l'axe 111 et l'organe de blocage vertical 115 du système d'indexation angulaire 110 du capot 200 sont introduits dans le logement d'indexation 414 du palonnier principal 410 ;

- successivement à l'étape 602 de mise en appui, une étape 603 de rotation du capot 200 par rapport au palonnier principal 410 afin de configurer le système d'indexation angulaire 110 dudit capot 200 dans le logement d'indexation 414 dudit palonnier principal 410 dans sa deuxième configuration angulaire, telle que décrite précédemment. Dans cette étape 603 de rotation, le capot 200 est maintenu en appui vertical contre le palonnier principal 410. Plus particulièrement, le capot 200 est pivoté autour de l'axe 111 du système d'indexation angulaire 110 afin de faire pivoter l'axe 111 et l'organe de blocage vertical 115 par rapport à l'ouverture 416 du palonnier principal 410, de manière à engager les portées 1151, 1152 de l'organe de blocage vertical 115 s'engagent en dessous de la plateforme d'appui 415 pour empêcher le capot 200 de pouvoir être désolidarisé du palonnier principal 410 par un simple mouvement de transaltion verticale. Dans cette deuxième configuration angulaire du système d'indexation angulaire 110 par rapport au logement d'indexation 414 du palonnier principal 410, le capot 200 est pivoté selon un angle de 90° par rapport à l'axe vertical Z, de manière à ce que les portées 1151, 1152 de l'organe de blocage vertical 115 soient pivotées selon un angle de 90° par rapport à l'ouverture 416 ;
- durant l'étape 603 de rotation du capot 200 par rapport au palonnier principal 410, une étape 604 d'engagement des rebords 1212 des butées latérales 121a, 121b formant l'organe de calage latéral 120 du capot 200 dans les lumières oblongues 4185 correspondantes des logements de calage latéral 418a, 418b du palonnier principal 410 ;
- à l'issue de l'étape 603 de rotation, et postérieurement à l'étape 604 d'engagement, une étape 605 de mise en butée latéral du capot 200 contre le palonnier principal 410. En particulier, l'étape 605 de mise en butée latéral comprend une étape de mise en butée latéral du système d'indexation angulaire 110 du capot 200 dans le logement d'indexation angulaire 418a, 418b correspondant du palonnier principal 410. Plus précisément, les bords 1156 et côtés 1155 latéraux des portées 1151, 1152 de l'organe de blocage vertical 115 du système d'indexation angulaire 110 sont mises en appui contre les flancs latéraux 4111 des butées d'indexation 411 logées dans le logement d'indexation 414 du palonnier principal 410.

En synthèse, l'invention concerne notamment un adaptateur 300 de monture 400 de balai d'essuyage 500, l'adaptateur 300 comprenant un capot 200 pouvant être fixé de manière amovible à un palonnier principal 410 de la monture 400, par un unique mouvement de rotation permettant l'engagement de formes complémentaires entre le capot 200 et le palonnier principal 410. Selon l'invention le capot 200 comprend un système d'indexation angulaire 110 qui permet de définir un axe de rotation du capot 200, le système d'indexation angulaire 110 collaborant avec une ouverture 416 du palonnier principal 410. L'ouverture 416 et le système d'indexation angulaire 110 ont une forme asymétrique pour permettre une indexation angulaire du capot 200 par rapport au palonnier principal 410 et, consécutivement, un couplage mécanique dudit capot 200 sur ledit palonnier principal 410.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Adaptateur (300) pour fixation d'une monture (400) de balai d'essuyage (500) sur un bras articulé de balai d'essuyage (500), l'adaptateur (300) comprenant :
- un capot (200) configuré pour être fixé de manière amovible à un palonnier principal (410) de la monture (400) de balai d'essuyage (500);
- un dispositif d'assemblage (100) du capot (200) sur un palonnier principal (410) de la monture (400) de balai d'essuyage (500) ;
le dispositif d'assemblage (100) comprenant un système d'indexation angulaire (110) configuré pour permettre un assemblage du capot (200) sur le palonnier principal (410) par rotation dudit capot (200) par rapport audit palonnier principal (410), le système d'indexation angulaire (110) comprenant :
- un axe (111) qui s'étend en saillie par rapport à une face d'appui (205) du capot (200); le système d'indexation angulaire étant **caractérisé en ce qu'**il comprend en outre
- un organe de blocage vertical (115) situé au niveau d'une extrémité libre de l'axe (111) du système d'indexation angulaire (110), l'organe de blocage vertical (115) étant configuré pour prendre :
o une première configuration angulaire dans laquelle l'organe de blocage vertical (115) permet une insertion du capot (200) dans le palonnier principal (410) ; et
o une deuxième configuration angulaire dans laquelle l'organe de blocage vertical (115) permet une solidarisation du capot (200) contre le palonnier principal (410).

2. Adaptateur (300) selon la revendication précédente, dans lequel l'organe de blocage vertical (115) du système d'indexation angulaire (110) comprend :
- une première portée (1151) qui s'étend perpendiculairement par rapport à l'axe (111) dudit système d'indexation angulaire (110) ;
- une deuxième portée (11152) qui s'étend perpendiculairement par rapport à l'axe (111) dudit système d'indexation angulaire (110).

3. Adaptateur (300) selon la revendication précédente, dans lequel l'organe de blocage vertical (115) du système d'indexation angulaire (110) comprend une face de blocage (1153) située en regard de la face d'appui (205) du capot (200), et/ou la première (1151) et la deuxième (1152) portée de l'organe de blocage vertical (115) du système d'indexation angulaire (110) sont délimitées longitudinalement par une face circulaire (1154).

4. Adaptateur (300) selon l'une quelconque des revendications 2 ou 3, dans lequel la première portée (1151) est prismatique et délimitée latéralement par deux côtés latéraux (1156) plans et parallèles entre eux, et/ou la deuxième portée (1152) est délimitée latéralement par deux bord latéraux (1155) plans formant un angle compris entre 20° et 45°.

5. Adaptateur (300) selon l'une quelconque des revendications précédentes, dans lequel le système d'indexation angulaire (110) comprend un organe de calage latéral (120) configuré pour permettre un alignement latéral du capot (200) sur le palonnier principal (410), ledit organe de calage latéral (120) du système d'indexation angulaire (110) comprenant :
- une première butée latérale (121b) située au niveau d'un premier côté latéral (210) du capot (200) ; et
- une deuxième butée latérale (121a) située au niveau d'un deuxième côté latéral (210) opposé au premier côté latéral (210) du capot (200).

6. Adaptateur (300) selon la revendication précédente, dans lequel chaque butée latérale (121a, 121b) formant l'organe de calage latéral (120) du système d'indexation angulaire (110) prend la forme d'une languette dont un profil transversal est du type en « L », ladite butée latérale (121a, 121b) comprenant :
- une portée d'élongation longitudinale (1211) qui s'étend en saillie depuis la face d'appui (205) du capot (200) et ;
- un rebord (1212) situé à une extrémité distale de la portée d'élongation longitudinale (1211), ledit rebord (1212) s'étendant latéralement par rapport à ladite portée d'élongation longitudinale (1211).

7. Adaptateur (300) selon la revendication précédente, dans lequel le rebord (1212) de chaque butée latérale (121a, 121b) s'étend en direction du côté latéral (210) opposé du capot (200) et/ou comprend une surface de blocage (1213) située en regard de la face d'appui (205) du capot (200).

8. Balai d'essuyage (500) de véhicule automobile comprenant :
- un adaptateur (300) selon l'une quelconque des revendications précédentes ;
- une monture (400) de balai d'essuyage (500), la monture (400) comprenant :
o un palonnier principal (410) sur lequel l'adaptateur (300) est fixé de manière amovible ;
o deux palonniers secondaires (420) fixés au palonnier principal (410) et supportant une lame d'essuyage (430).

9. Balai d'essuyage (500) selon la revendication précédente et pris en combinaison avec l'adaptateur (300) selon l'une quelconque des revendications 1 à 7, dans lequel le palonnier principal (410) comprend une plateforme d'appui (415) contre laquelle la face d'appui (205) (205) du capot (200) est mise en appui, ladite plateforme d'appui (415) du palonnier principal (410) comprenant une ouverture (416) configurée pour permettre un engagement de l'axe (111) et de l'organe de blocage vertical (115) du système d'indexation angulaire (110).

10. Balai d'essuyage (500) selon l'une quelconque des revendications 8 ou 9, dans lequel le palonnier principal (410) comprend un logement d'indexation (414) du capot (200) de l'adaptateur par rapport audit palonnier principal (410), le logement d'indexation (414) étant délimité radialement par une paroi cylindrique (4141) et délimitée verticalement par la plateforme d'appui (415).

11. Balai d'essuyage (500) selon l'une quelconque des revendications 9 ou 10, dans lequel la plateforme d'appui (415) comprend :
- un premier logement de calage latéral (418a) collaborant avec la première butée latérale (121b) de l'organe de calage latéral (120), le premier logement de calage latéral (418a) étant situé au niveau d'un premier bord latéral (413) de la plateforme d'appui (415) ; et
- un deuxième logement de calage latéral (418b) collaborant avec la deuxième butée latérale (212a) de l'organe de calage latéral (120), le deuxième logement de calage latéral (418b) étant situé au niveau d'un deuxième bord latéral (413) opposé au premier bord latéral (413) de la plateforme d'appui (415).

12. Balai d'essuyage (500) selon la revendication précédente, dans lequel chaque logement de calage latéral (418a, 418b) collaborant avec l'organe de calage (120) du système d'indexation angulaire (110) du capot (200) de l'adaptateur (300) est délimité par :
- une surface inférieure (4181) située verticalement à une distance de la plateforme d'appui (415) supérieure à la distance séparant verticalement la face inférieure (1215) de l'organe de calage latéral (120) du capot (200) de la face d'appui (205) dudit capot (200) ; et/ou
- une surface d'appui latéral (4182) située en retrait par rapport au bord latéral (413) de la plateforme d'appui (415), ladite surface d'appui latéral (4182) de chaque logement de calage latéral (418a, 418b) étant destinée à être mise en appui contre la face d'appui (205) latéral du rebord (1212) de chaque butée latérale (121a, 121b) formant l'organe de calage latéral (120) du système d'indexation angulaire (110) du capot (200) de l'adaptateur (300) ; et/ou
- deux bords longitudinaux (4183) permettant une insertion de l'organe de calage latéral (120) du système d'indexation angulaire (110) du capot (200) de l'adaptateur (300) dans le logement de calage latéral (418a, 418b) correspondant, par un mouvement de rotation autour de l'axe (111) dudit système d'indexation angulaire (110).

## Patentansprüche

1. Adapter (300) zur Befestigung eines Gestänges (400) eines Scheibenwischers (500) an einem Gelenkarm eines Scheibenwischers (500), wobei der Adapter (300) Folgendes beinhaltet:
- eine Abdeckung (200), die dazu konfiguriert ist, entfernbar an einer Hauptstange (410) des Gestänges (400) eines Scheibenwischers (500) befestigt zu sein;
- eine Vorrichtung zur Anbringung (100) der Abdeckung (200) an einer Hauptstange (410) des Gestänges (400) eines Scheibenwischers (500);
wobei die Anbringungsvorrichtung (100) ein Winkelpositionierungssystem (110) beinhaltet, das dazu konfiguriert ist, eine Anbringung der Abdeckung (200) an der Hauptstange (410) durch Drehung der Abdeckung (200) in Bezug auf die Hauptstange (410) zu ermöglichen, wobei das Winkelpositionierungssystem (110) Folgendes beinhaltet:
- eine Achse (111), die sich in Bezug auf eine Anlagefläche (205) der Abdeckung (200) vorspringend erstreckt;
wobei das Winkelpositionierungssystem **dadurch gekennzeichnet ist, dass** es ferner Folgendes beinhaltet:
- ein Organ zur vertikalen Blockierung (115), das sich an einem freien Ende der Achse (111) des Winkelpositionierungssystems (110) befindet, wobei das Organ zur vertikalen Blockierung (115) dazu konfiguriert ist, Folgendes einzunehmen:
o eine erste Winkelkonfiguration, in der das Organ zur vertikalen Blockierung (115) eine Einführung der Abdeckung (200) in die Hauptstange (410) ermöglicht; und
o eine zweite Winkelkonfiguration, in der das Organ zur vertikalen Blockierung (115) eine feste Verbindung zwischen der Abdeckung (200) und der Hauptstange (410) ermöglicht.

2. Adapter (300) nach dem vorhergehenden Anspruch, wobei das Organ zur vertikalen Blockierung (115) des Winkelpositionierungssystems (110) Folgendes beinhaltet:
- einen ersten Bereich (1151), der sich zu der Achse (111) des Winkelpositionierungssystems (110) senkrecht erstreckt;
- einen zweiten Bereich (11152), der sich zu der Achse (111) des Winkelpositionierungssystems (110) senkrecht erstreckt.

3. Adapter (300) nach dem vorhergehenden Anspruch, wobei das Organ zur vertikalen Blockierung (115) des Winkelpositionierungssystems (110) eine Blockierfläche (1153) beinhaltet, die sich gegenüber der Anlagefläche (205) der Abdeckung (200) befindet, und/oder der erste (1151) und der zweite (1152) Bereich des Organs zur vertikalen Blockierung (115) des Winkelpositionierungssystems (110) in Längsrichtung durch eine Kreisfläche (1154) begrenzt werden.

4. Adapter (300) nach einem beliebigen der Ansprüche 2 oder 3, wobei der erste Bereich (1151) prismatisch ist und durch zwei laterale Seiten (1156), die eben und zueinander parallel sind, lateral begrenzt wird, und/oder der zweite Bereich (1152) durch zwei ebene laterale Ränder (1155), die einen Winkel zwischen 20° und 45° bilden, lateral begrenzt wird.

5. Adapter (300) nach einem beliebigen der vorhergehenden Ansprüche, wobei das Winkelpositionierungssystem (110) ein Organ zur lateralen Verkeilung (120) beinhaltet, das dazu konfiguriert ist, eine laterale Ausrichtung der Abdeckung (200) nach der Hauptstange (410) zu ermöglichen, wobei das Organ zur lateralen Verkeilung (120) des Winkelpositionierungssystems (110) Folgendes beinhaltet:
- einen ersten lateralen Anschlag (121b), der sich auf einer ersten lateralen Seite (210) der Abdeckung (200) befindet; und
- einen zweiten lateralen Anschlag (121a), der sich auf einer zweiten lateralen Seite (210), die zu der ersten lateralen Seite (210) der Abdeckung (200) entgegengesetzt ist, befindet.

6. Adapter (300) nach dem vorhergehenden Anspruch, wobei jeder laterale Anschlag (121a, 121b), der das Organ zur lateralen Verkeilung (120) des Winkelpositionierungssystems (110) bildet, die Form einer Leiste aufweist, von der ein Querprofil vom Typ "L" ist, wobei der laterale Anschlag (121a, 121b) Folgendes beinhaltet:
- einen Längsausdehnungsbereich (1211), der sich von der Anlagefläche (205) der Abdeckung (200) vorspringend erstreckt, und;
- eine Kante (1212), die sich an einem distalen Ende des Längsausdehnungsbereichs (1211) befindet, wobei sich die Kante (1212) in Bezug auf den Längsausdehnungsbereich (1211) lateral erstreckt.

7. Adapter (300) nach dem vorhergehenden Anspruch, wobei sich die Kante (1212) jedes lateralen Anschlags (121a, 121b) in Richtung der entgegengesetzten lateralen Seite (210) der Abdeckung (200) erstreckt und/oder eine Blockieroberfläche (1213) beinhaltet, die sich gegenüber der Anlagefläche (205) der Abdeckung (200) befindet.

8. Scheibenwischer (500) eines Kraftfahrzeugs, der Folgendes beinhaltet:
- einen Adapter (300) nach einem beliebigen der vorhergehenden Ansprüche;
- ein Gestänge (400) eines Scheibenwischers (500), wobei das Gestänge (400) Folgendes beinhaltet:
o eine Hauptstange (410), an der der Adapter (300) entfernbar befestigt ist;
o zwei sekundäre Stangen (420), die an der Hauptstange (410) befestigt sind und ein Wischblatt (430) tragen.

9. Scheibenwischer (500) nach dem vorhergehenden Anspruch und in Kombination mit dem Adapter (300) nach einem beliebigen der Ansprüche 1 bis 7, wobei die Hauptstange (410) eine Anlageplattform (415) beinhaltet, an der die Anlagefläche (205) (205) der Abdeckung (200) zur Anlage gebracht wird, wobei die Anlageplattform (415) der Hauptstange (410) eine Öffnung (416) beinhaltet, die dazu konfiguriert ist, einen Eingriff der Achse (111) mit dem Organ zur vertikalen Blockierung (115) des Winkelpositionierungssystems (110) zu ermöglichen.

10. Scheibenwischer (500) nach einem beliebigen der Ansprüche 8 oder 9, wobei die Hauptstange (410) eine Aufnahme zur Positionierung (414) der Abdeckung (200) des Adapters in Bezug auf die Hauptstange (410) beinhaltet, wobei die Positionierungsaufnahme (414) radial durch eine zylindrische Wand (4141) begrenzt wird und vertikal durch die Anlageplattform (415) begrenzt wird.

11. Scheibenwischer (500) nach einem beliebigen der Ansprüche 9 oder 10, wobei die Anlageplattform (415) Folgendes beinhaltet:
- eine erste Aufnahme zur lateralen Verkeilung (418a), die mit dem ersten lateralen Anschlag (121b) des Organs zur lateralen Verkeilung (120) zusammenwirkt, wobei sich die erste Aufnahme zur lateralen Verkeilung (418a) an einem ersten lateralen Rand (413) der Anlageplattform (415) befindet; und
- eine zweite Aufnahme zur lateralen Verkeilung (418b), die mit dem zweiten lateralen Anschlag (212a) des Organs zur lateralen Verkeilung (120) zusammenwirkt, wobei sich die zweite Aufnahme zur lateralen Verkeilung (418b) an einem zweiten lateralen Rand (413), der zu dem ersten lateralen Rand (413) der Anlageplattform (415) entgegengesetzt ist, befindet.

12. Scheibenwischer (500) nach dem vorhergehenden Anspruch, wobei jede Aufnahme zur lateralen Verkeilung (418a, 418b), die mit dem Verkeilungsorgan (120) des Winkelpositionierungssystems (110) der Abdeckung (200) des Adapters (300) zusammenwirkt, durch Folgendes begrenzt wird:
- eine untere Oberfläche (4181), die sich vertikal in einem Abstand zu der Anlageplattform (415) befindet, der größer ist als der Abstand, der die untere Fläche (1215) des Organs zur lateralen Verkeilung (120) der Abdeckung (200) vertikal von der Anlagefläche (205) der Abdeckung (200) trennt; und/oder
- eine laterale Anlageoberfläche (4182), die sich in Bezug auf den lateralen Rand (413) der Anlageplattform (415) zurückgezogen befindet, wobei die laterale Anlageoberfläche (4182) jeder Aufnahme zur lateralen Verkeilung (418a, 418b) dazu bestimmt ist, an der lateralen Anlagefläche (205) der Kante (1212) jedes lateralen Anschlags (121a, 121b), der das Organ zur lateralen Verkeilung (120) des Winkelpositionierungssystems (110) der Abdeckung (200) des Adapters (300) bildet, zur Anlage gebracht zu werden; und/oder
- zwei Längsränder (4183), die eine Einführung des Organs zur lateralen Verkeilung (120) des Winkelpositionierungssystems (110) der Abdeckung (200) des Adapters (300) in die entsprechende Aufnahme zur lateralen Verkeilung (418a, 418b) durch eine Drehbewegung um die Achse (111) des Winkelpositionierungssystems (110) ermöglichen.

## Claims

1. An adapter (300) for fastening a wiper blade (500) mounting (400) on an articulated wiper blade arm (500), the adapter (300) comprising:
- a cover (200) configured so that it can be removably fastened to a main cross-bar (410) of the wiper blade (500) mounting (400);
- a device (100) for assembling the cover (200) on a main cross-bar (410) of the wiper blade (500) mounting (400);
the assembly device (100) comprising an angular indexing system (110) configured to allow the assembly of the cover (200) on the main cross-bar (410) by rotating said cover (200) relative to said main cross-bar (410), the angular indexing system comprising:
- a shaft (111) that extends protruding relative to a bearing face (205) of the cover (200);
the angular indexing system (110) being **characterised in that** it further comprises:
- a vertical locking member (115) situated at a free end of the shaft (111) of the angular indexing system (110), the vertical locking member (115) being configured to adopt:
o a first angular configuration in which the vertical locking member (115) allows the insertion of the cover (200) into the main cross-bar (410); and
o a second angular configuration in which the vertical locking member (115) allows the rigid connection of the cover (200) to the main cross-bar (410).

2. The adapter (300) as claimed in the preceding claim, in which the vertical locking member (115) of the angular indexing system (110) comprises:
- a first boss (1151) that extends perpendicularly relative to the shaft (111) of said angular indexing system (110);
- a second boss (11152) that extends perpendicularly relative to the shaft (111) of said angular indexing system (110).

3. The adapter (300) as claimed in the preceding claim, in which the vertical locking member (115) of the angular indexing system (110) comprises a locking face (1153) situated facing the bearing face (205) of the cover (200), and/or the first (1151) and second (1152) bosses of the vertical locking member (115) of the angular indexing system (110) are longitudinally delimited by a circular face (1154).

4. The adapter (300) as claimed in any one of claims 2 and 3, in which the first boss (1151) is prismatic and laterally delimited by two flat, parallel lateral sides (1156), and/or the second boss (1152) is laterally delimited by two flat lateral edges (1155) forming an angle of between 20° and 45°.

5. The adapter (300) as claimed in any one of the preceding claims, in which the angular indexing system (110) comprises a lateral keying member (120) configured to allow the lateral alignment of the cover (200) on the main cross-bar (410), said lateral keying member (120) of the angular indexing system (110) comprising:
- a first lateral stop (121b) situated on a first lateral side (210) of the cover (200); and
- a second lateral stop (121a) situated on a second lateral side (210) opposite the first lateral side (210) of the cover (200).

6. The adapter (300) as claimed in the preceding claim, in which each lateral stop (121a, 121b) forming the lateral keying member (120) of the angular indexing system (110) takes the form of a tab having an L-shaped transverse profile, said lateral stop (121a, 121b) comprising:
- a longitudinally extending boss (1211) that extends protruding from the bearing face (205) of the cover (200); and
- a lip (1212) situated at a distal end of the longitudinally extending boss (1211), said lip (1212) extending laterally relative to said longitudinally extending boss (1211).

7. The adapter (300) as claimed in the preceding claim, in which the lip (1212) of each lateral stop (121a, 121b) extends towards the opposite lateral side (210) of the cover (200) and/or comprises a locking surface (1213) situated facing the bearing face (205) of the cover (200).

8. A wiper blade (500) for a motor vehicle comprising:
- an adapter (300) as claimed in any one of the preceding claims;
- a wiper blade (500) mounting (400), the mounting (400) comprising:
o a main cross-bar (410) to which the adapter (300) is removably fastened;
o two secondary cross-bars (420) fastened to the main cross-bar (410) and supporting a wiper rubber (430).

9. The wiper blade (500) as claimed in the preceding claim and taken in combination with the adapter (300) as claimed in any one of claims 1 to 7, in which the main cross-bar (410) comprises a bearing platform (415) against which the bearing face (205) (205) of the cover (200) is pressed, said bearing platform (415) of the main cross-bar (410) comprising an opening (416) configured to allow the engagement of the shaft (111) and the vertical locking member (115) of the angular indexing system (110).

10. The wiper blade (500) as claimed in any one of claims 8 and 9, in which the main cross-bar (410) comprises a recess (414) for indexing the cover (200) of the adapter relative to said main cross-bar (410), the indexing recess (414) being radially delimited by a cylindrical wall (4141) and vertically delimited by the bearing platform (415).

11. The wiper blade (500) as claimed in any one of claims 9 and 10, in which the bearing platform (415) comprises:
- a first lateral keying recess (418a) interacting with the first lateral stop (121b) of the lateral keying member (120), the first lateral keying recess (418a) being situated in a first lateral edge (413) of the bearing platform (415); and
- a second lateral keying recess (418b) interacting with the second lateral stop (212a) of the lateral keying member (120), the second lateral keying recess (418b) being situated in a second lateral edge (413) opposite the first lateral edge (413) of the bearing platform (415).

12. The wiper blade (500) as claimed in the preceding claim, in which each lateral keying recess (418a, 418b) interacting with the keying member (120) of the angular indexing system (110) of the cover (200) of the adapter (300) is delimited by:
- a lower surface (4181) situated vertically at a distance from the bearing platform (415) that is greater than the distance vertically separating the lower face (1215) of the lateral keying member (120) of the cover (200) from the bearing face (205) of said cover (200); and/or
- a lateral bearing surface (4182) situated set back relative to the lateral edge (413) of the bearing platform (415), said lateral bearing surface (4182) of each lateral keying recess (418a, 418b) being suitable for being pressed against the lateral bearing face (205) of the lip (1212) of each lateral stop (121a, 121b) forming the lateral keying member (120) of the angular indexing system (110) of the cover (200) of the adapter (300); and/or
- two longitudinal edges (4183) allowing the insertion of the lateral keying member (120) of the angular indexing system (110) of the cover (200) of the adapter (300) into the corresponding lateral keying recess (418a, 418b), by a rotating movement about the shaft (111) of said angular indexing system (110).
